# EUROPÄISCHE PATENTSCHRIFT

(11) **EP 1 048 828 B1**
(45) Veröffentlichungstag und Bekanntmachung des Hinweises auf die Patenterteilung: **29.01.2003**
(21) Anmeldenummer: 00108389.8
(22) Anmeldetag: 17.04.2000
(51) Int. Cl.: F01N 3/28

(54) **Katalytischer Konverter**
Catalytic converter
Convertisseur catalytique

(30) Priorität: 26.04.1999 DE 19918876
(43) Veröffentlichungstag der Anmeldung: 02.11.2000
(73) Patentinhaber: Delphi Technologies, Inc., Troy, MI 48007 (US)
(72) Erfinder: Bashford-Rogers, Graham C., Messancy (BE); Mathias, Eric, Luxembourg (LU); Bouraad, Georges, 4907 Bascharage (LU)
(74) Vertreter: Manitz, Finsterwald & Partner GbR

(56) Entgegenhaltungen:
- EP-A- 0 786 284
- WO-A-96/36423
- WO-A-97/29835
- US-A- 4 118 199
- US-A- 5 108 716
- US-A- 5 332 554
- US-A- 5 403 559
- US-A- 5 611 198

## Beschreibung

Die Erfindung betrifft einen katalytischen Konverter für eine Abgasanlage einer Verbrennungskraftmaschine, insbesondere einer Diesel-Verbrennungskraftmaschine, mit einem Gehäuse, an dem ein Einlaß zum Anschluß an die Verbrennungskraftmaschine und ein Auslaß ausgebildet sind, sowie mit einem ersten und einem zweiten mit einem katalytisch wirksamen Edelmetall beschichteten Substrat, die in Strömungsrichtung des Abgases gesehen aufeinander folgend im Gehäuse angeordnet sind, wobei das erste Substrat nahe dem Einlaß angeordnet ist.

Ein katalytischer Konverter der eingangs genannten Art für eine Abgasanlage einer Verbrennungskraftmaschine ist bekannt. Bei diesem bekannten Konverter wird mit Hilfe des ersten Substrates im Abgas enthaltenes Kohlenmonoxid sowie darin enthaltene Kohlenwasserstoffe durch Oxidation in Kohlendioxid bzw. Kohlendioxid und Wasser umgewandelt. Das zweite mit katalytisch wirksamem Edelmetall beschichtete Substrat wandelt durch Reduktion die Stickoxide des Abgases in Stickstoff und Kohlendioxid um.

Damit die Schadstoffe in den Abgasen entsprechend den gesetzlichen Bestimmungen unter einer maximal zulässigen Schadstoffmenge liegen, wird der Konverter an die Leistung der Verbrennungskraftmaschine angeglichen. Zu diesem Zweck kann der Gesamtanteil an katalytisch wirksamem Edelmetall und/oder das Konvertervolumen entsprechend angepaßt werden, damit der Konverter eine ausreichend hohe Konvertierungsrate aufweist. In diesem Zusammenhang wird unter dem Begriff Konvertierungsrate die auf die Schadstoffmenge des Abgases vor dem Durchströmen des Konverters bezogene Differenz zwischen der Schadstoffmenge im Abgas vor dem Durchströmen des Konverters und der Schadstoffmenge nach dem Durchströmen des Konverters verstanden.

Aus der EP-A-0 786 284 ist ein katalytischer Konverter gemäß dem Oberbegriff des Anspruchs 1 bekannt, bei dem das in Richtung des Abgasstromes gesehene zweite und dritte Substrat jeweils gleiche Mengen von katalytisch wirksamem Edelmetall aufweisen, wobei die Edelmetallbeschichtung des zweiten und dritten Substrates jeweils deutlich geringer als die des ersten Substrates ist.

Die WO 97/29835 offenbart eine Anordnung zum Abbau von Stickoxiden in einem Gasstrom mit mehreren, in dem Gasstrom hintereinander angeordneten Katalysatorelementen, die von dem Gas durchströmbar sind. Jedes der Katalysatorelemente ist mit einem katalytisch aktiven Medium versehen, wobei die mittlere katalytische Aktivität eines jeden Katalysatorelementes in Richtung des Gasstroms gesehen von Katalysatorelement zu Katalysatorelement ansteigt.

Es ist Aufgabe der Erfindung, den katalytischen Konverter der eingangs genannten Art so weiterzubilden, daß bei gleicher Edelmetallmenge die Konvertierungsrate des Konverters verbessert bzw. bei gleicher Konvertierungsrate die notwendige Menge Edelmetalls verringert ist.

Die Erfindung löst die Aufgabe durch einen katalytischen Konverter mit den Merkmalen nach Anspruch 1, insbesondere löst sie die Aufgabe dadurch, daß in Strömungsrichtung des Abgases gesehen nach dem zweiten Substrat ein mit mindestens einem katalytisch wirksamen Edelmetall beschichtetes drittes Substrat nahe dem Auslaß im Gehäuse angeordnet ist, wobei das zweite Substrat mit einer geringeren Menge katalytisch wirksamen Edelmetalls beschichtet ist als das erste und das dritte Substrat.

Bei dem erfindungsgemäßen Konverter werden insgesamt drei Substrate verwendet. Dabei ist das zwischen dem ersten und dem dritten Substrat angeordnete zweite Substrat mit einer geringeren Menge katalytisch wirksamen Edelmetalls beschichtet als die beiden anderen Substrate. Durch den erfindungsgemäßen Konverter wird erreicht, daß, verglichen mit einem herkömmlichen katalytischen Konverter, der mit derselben Gesamtmenge an katalytisch wirksamem Edelmetall bezogen auf ein vorgegebenes Volumen beschichtet ist, bei gleicher Edelmetallmenge eine höhere Konvertierungsrate erzielt wird. Ferner ist es durch die Erfindung möglich, bei gleichbleibender Konvertierungsrate die Menge an zu verwendendem katalytisch wirksamen Edelmetall zu verringern. In diesem Fall kann auch das Volumen des Konverters durch den verbesserten Wirkungsgrad der einzelnen Substrate bei gleichbleibender Konvertierungsrate verringert werden. Wird der erfindungsgemäße Konverter mit einer Diesel-Verbrennungskraftmaschine verwendet, wirkt der Konverter gleichzeitig auch als Rußfilter. Dabei ist die Konvertierungsrate des erfindungsgemäßen Konverters bei der Umwandlung von Rußpartikeln verglichen mit der Konvertierungsrate bekannter Konverter mit entsprechender Leistung gleichfalls verbessert.

Weitere vorteilhafte Weiterbildungen der Erfindung ergeben sich aus der nachfolgenden Beschreibung, den Diagrammen sowie den Unteransprüchen.

So wird vorgeschlagen, daß das Gehalt an katalytisch wirksamem Edelmetall des ersten und dritten Substrates in einem Bereich von etwa 1,77 g/dm³ bis etwa 5,30 g/dm³ (50 g/ft³ bis 150 g/ft³) liegen soll. Der Gehalt an katalytisch wirksamem Edelmetall des zweiten Substrates liegt vorzugsweise in einem Bereich von etwa 0,035 g/dm³ bis etwa 0,35 g/dm³ (1 g/ft³ bis 10 g/ft³). Bei diesen Edelmetallgehalten der Beschichtungen der Substrate ließen sich besonders gute Versuchsergebnisse erzielen.

Das Volumen des ersten Substrates beträgt bei einer bevorzugten Ausführungsform 20 bis 50% des Volumens aller Substrate des Konverters. Im Verhältnis dazu liegt das Volumen des zweiten katalytischen Substrates in einem Bereich von 30 bis 70%, vorzugsweise bei 40%, des Volumens aller Substrate. Das wirksame Volumen des dritten Substrates beträgt etwa 30 bis 40% des Volumens aller Substrate. Durch entsprechendes Aufeinanderabstimmen der verschiedenen Volumina der drei Substrate kann der katalytische Konverter gezielt an die unterschiedlichen Betriebsbedingungen der Verbrennungskraftmaschine angepaßt werden.

Bei einer bevorzugten Ausführungsform des erfindungsgemäßen katalytischen Konverters beträgt der Gehalt an katalytisch wirksamem Edelmetall des ersten und dritten Substrates etwa 2,47 g/dm³ (70 g/ft³), während der Gehalt an katalytisch wirksamem Edelmetall des zweiten Substrates bei etwa 0,35 g/dm³ (10 g/ft³) liegt. Dabei entspricht der durchschnittliche Gehalt an katalytisch wirksamem Edelmetall des katalytischen Konverters etwa 1,77 g/dm³ (50 g/ft³). Bei dieser Ausführungsform wird insbesondere die Konvertierungsrate bei der Umwandlung von Kohlenwasserstoffen und Kohlenmonoxid verglichen mit katalytischen Konvertern, die einen entsprechenden durchschnittlichen Gehalt an katalytisch wirksamem Edelmetall enthalten, deutlich verbessert.

Bei einer alternativen Ausführungsform beträgt der Gehalt an katalytisch wirksamem Edelmetall des ersten und dritten Substrates etwa 3,53 g/dm³ (100 g/ft³), während der Gehalt an Edelmetall des zweiten Substrates bei etwa 0,071 g/dm³ (2 g/ft³) liegt. Auch hier entspricht der durchschnittliche Gehalt an katalytisch wirksamem Edelmetall des katalytischen Konverters etwa 1,77 g/dm³ (50 g/ft³). Diese Ausführungsform zeichnet sich insbesondere bei vergleichsweise geringem Konvertervolumen durch eine vergleichsweise hohe Konvertierungsrate bei der Umwandlung von Stickoxiden aus.

Des weiteren wird vorgeschlagen, am Gehäuse des katalytischen Konverters eine Zuführung auszubilden, durch die zusätzlich Kohlenwasserstoffe, vorzugsweise aus dem Verbrennungsprozeß der Verbrennungskraftmaschine in das Gehäuse des Konverters eingeleitet werden können. Durch die zusätzlichen Kohlenwasserstoffe ist eine aktive Stickstoffreduktion im Konverter möglich, da die zusätzlich eingeführten Kohlenwasserstoffe unter Bildung von Kohlendioxid und Stickstoff mit den Stickoxiden reagieren können. Zum Einleiten der zusätzlichen Kohlenwasserstoffe wird vorzugsweise eine Druckleitung eingesetzt, durch die dem Gehäuse Kohlenwasserstoffe aus dem Abgas der Verbrennungskraftmaschine oder geringe Mengen Kraftstoff, die durch die im Konverter herrschenden Temperaturen unter Bildung entsprechender Abgase verbrennen, zugeführt werden.

Nachfolgend wird die Erfindung anhand zweier Ausführungsformen unter Bezugnahme auf die Zeichnung näher erläutert. Darin zeigen:
- Fig. 1: ein Diagramm, in dem die Konvertierungsraten eines herkömmlichen katalytischen Konverters im Vergleich zu den Konvertierungsraten einer ersten Ausführungsform eines erfindungsgemäßen katalytischen Konverters dargestellt sind,
- Fig. 2: ein Diagramm, in dem die Konvertierungsraten eines herkömmlichen katalytischen Konverters im Vergleich zu einer zweiten Ausführungsform eines erfindungsgemäßen katalytischen Konverters dargestellt sind,
- Fig. 3: ein Diagramm, in dem die Konvertierungsraten zweier herkömmlicher katalytischer Konverter im Vergleich zu den Konvertierungsraten eines Konverters nach der ersten Ausführungsform dargestellt sind, wobei sich die beiden Vergleichskonverter in ihren Edelmetallanteilen unterscheiden, und
- Fig. 4: ein Diagramm, in dem die Konvertierungsraten eines herkömmlichen katalytischen Konverters im Vergleich zu den Konvertierungsraten eines Konverters nach der ersten Ausführungsform dargestellt sind, wobei das Konvertervolumen des herkömmlichen Konverters größer ist als das des erfindungsgemäßen Konverters.

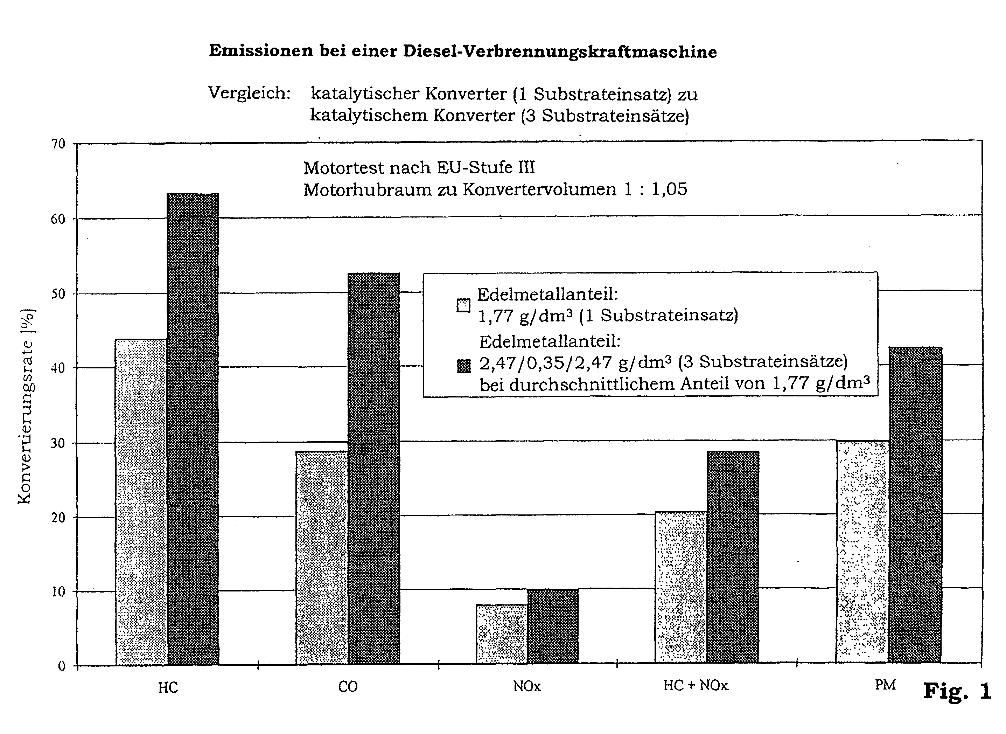

Bei den in den Fig. 1 bis 4 gezeigten Auswertungen von Motortests wurden zwei verschiedene Ausführungsformen eines erfindungsgemäßen katalytischen Konverters verwendet. Die beiden Ausführungsformen sind identisch aufgebaut, unterscheiden sich jedoch in den verwendeten Substrateinsätzen. Der erfindungsgemäße katalytische Konverter weist ein aus einem hitzebeständigen, hochwertigen Stahl gefertigtes Gehäuse auf, an dem ein Einlaß und ein Auslaß ausgebildet sind. Der Einlaß ist in eingebautem Zustand des katalytischen Konverters üblicherweise mit einem Vorschalldämpfer einer Abgasanlage einer Verbrennungskraftmaschine verbunden, der seinerseits an den Krümmer der Verbrennungskraftmaschine angeschlossen ist. Der Auslaß des katalytischen Konverters ist an einen Mittelschalldämpfer der Abgasanlage angeschlossen, der seinerseits mit einem Nachschalldämpfer verbunden ist.

Im Gehäuse sind drei Substrateinsätze, sogenannte Monolithe, eingesetzt, die aus einem Metall oder Keramikmaterial gefertigt sind. In jedem Monolith sind in dessen Längsrichtung verlaufende Kanäle ausgebildet, wobei die Anzahl der Kanäle pro cm² bei etwa 54 bis 62 Kanälen (350 bis 400 Kanäle pro in²) liegen. Die Innenoberfläche jedes Kanals ist mit einer Zwischenschicht, beispielsweise Aluminiumoxid (Al₂O₃), beschichtet, auf der eine katalytisch wirksame Edelmetallschicht aus Palladium, Platin, Rhodium oder ähnlichen Platinmetallen aufgetragen ist. Selbstverständlich kann die katalytisch wirksame Schicht auch aus mehreren Edelmetallen oder Edelmetallegierungen gebildet sein. Des weiteren kann sich die Zusammensetzung der Edelmetallschichten der verschiedenen Substrateinsätze unterscheiden.

In Fig. 1 sind die Konvertierungsraten eines herkömmlichen katalytischen Konverters mit einem Substrateinsatz im Vergleich zu einem erfindungsgemäßen katalytischen Konverter mit drei Substrateinsätzen dargestellt. Die Vergleichswerte wurden im Rahmen eines Motortestes gemäß der EU-Stufe III bestimmt, wobei das Verhältnis zwischen Motorhubraum und Konvertervolumen bei 1 : 1,05 liegt. Der Gehalt an Edelmetall in der katalytisch wirksamen Schicht des herkömmlichen Konverters liegt bei 1,77g/dm³ (50 g/ft³). Bei dem erfindungsgemäßen katalytischen Konverter werden insgesamt drei Substrateinsätze bzw. Monolithe verwendet. Der nahe dem Einlaß angeordnete erste Monolith weist eine Edelmetallschicht mit einem Edelmetallanteil von 2,47 g/dm³ (70 g/ft³) auf. Der in Strömungsrichtung gesehen zweite Substrateinsatz ist mit einer katalytisch wirksamen Edelmetallschicht versehen, die einen Edelmetallgehalt von 0,35 g/dm³ (10 g/ft³) aufweist. Der sich an diesen anschließende dritte Substrateinsatz nahe dem Auslaß des Konverters ist mit einer Edelmetallschicht versehen, die einen Anteil von 2,47 g/dm³ (70 g/ft³) an katalytisch wirksamem Edelmetall aufweist. Der durchschnittliche Gesamtanteil an katalytisch wirksamem Edelmetall liegt, wie beim Vergleichskonverter, bei 1,77 g/dm³ (50 g/ft³).

Wie dem Diagramm zu entnehmen ist, liegt die Konvertierungsrate des erfindungsgemäßen Konverters bei den Kohlenwasserstoffen (HC) mit etwa 63% und bei Kohlenmonoxid (CO) mit etwa 52% deutlich über den Konvertierungsraten des Vergleichskonverters. Auch die Konvertierungsraten für Stickoxide (NOx) und die Umwandlung von Stickoxiden unter Zuhilfenahme von Kohlenwasserstoffen (HC + NOx) liegen bei dem erfindungsgemäßen Konverter über den Konvertierungsraten des Vergleichskonverters. Des weiteren ist auch die Konvertierungsrate bei der Umwandlung von Rußpartikeln in Kohlendioxid (im Diagramm mit PM bezeichnet), mit der die Filterwirkung des Konverters bei dessen Verwendung mit einer Diesel-Verbrennungskraftmaschine beschrieben wird, gegenüber der Konvertierungsrate des Vergleichskonverters gleichfalls verbessert.

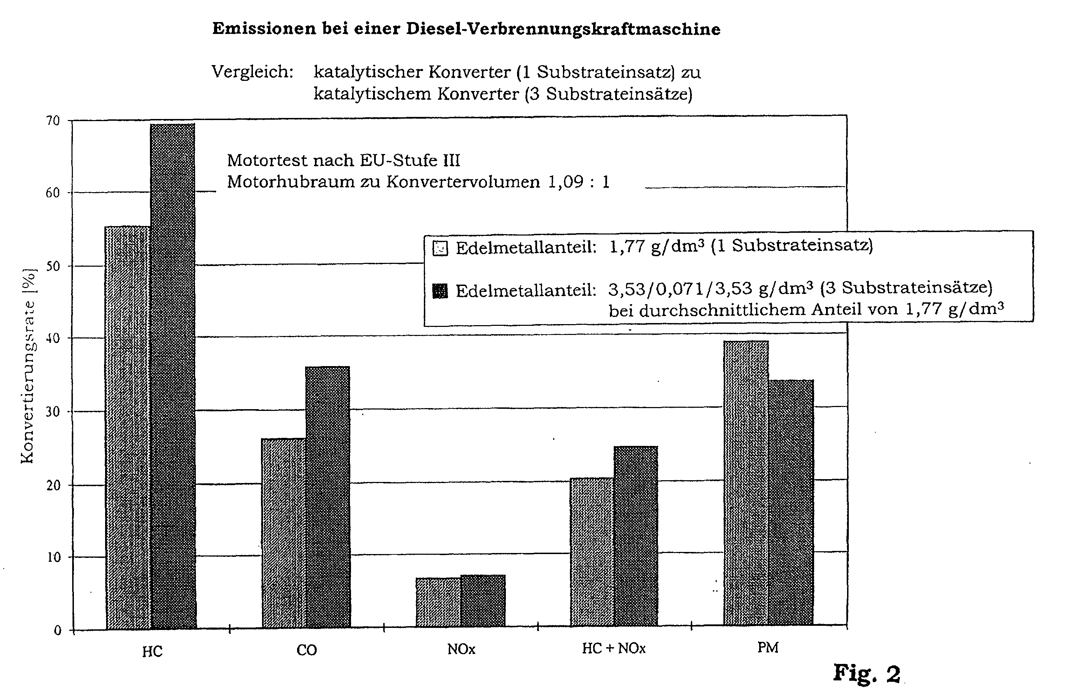

In Fig. 2 ist ein zweites Diagramm dargestellt, das gleichfalls während eines Motortestes nach der EU-Stufe III erstellt worden ist. Das Verhältnis zwischen Motorhubraum und Konvertervolumen liegt hier bei 1,09 : 1. Bei diesem Test wurde als Vergleichskonverter ein herkömmlicher katalytischer Konverter mit einem Substrateinsatz verwendet, dessen katalytisch wirksame Schicht einen Edelmetallanteil von 1,77 g/dm³ (50 g/ft³) aufweist. Bei diesem Vergleichstest wurde eine zweite Ausführungsform des erfindungsgemäßen Konverters mit drei Substrateinsätzen verwendet. Bei dieser zweiten Ausführungsform liegt der Edelmetallanteil der Beschichtung des nahe dem Einlaß im Gehäuse angeordneten ersten Substrateinsatzes bei 3,53 g/dm³ (100 g/ft³), während der Edelmetallgehalt der Beschichtung des zweiten Substrateinsatzes bei 0,071 g/dm³ (2 g/ft³) liegt. Der sich an diesen in Strömungsrichtung des Abgases gesehen anschließende dritte Substrateinsatz ist, wie der erste Substrateinsatz, mit einer Edelmetallbeschichtung versehen, die einen Edelmetallanteil von 3,53 g/dm³ (100 g/ft³) aufweist. Auch hier liegt der durchschnittliche Edelmetallanteil der Beschichtungen des erfindungsgemäßen Konverters bei 1,77 g/dm³ (50 g/ft³).

Wie dem Vergleichstest zu entnehmen ist, liegen die Konvertierungsraten des erfindungsgemäßen Konverters bei allen auftretenden Abgasen, nämlich Kohlenwasserstoffen (HC), Kohlenmonoxid (CO) sowie Stickoxiden (NOx, HC + NOX) über den Konvertierungsraten des herkömmlichen Vergleichskonverters. Die Konvertierungsrate des erfindungsgemäßen Konverters bei der Umwandlung von Rußpartikel in Kohlendioxid (PM) liegt etwas unter der Konvertierungsrate des herkömmlichen Konverters, wie dem Diagramm in Fig. 2 zu entnehmen ist, die beim erfindungsgemäßen Konverter gemessenen Schadstoffwerte liegen jedoch noch deutlich unter den gesetzlich maximal zulässigen Grenzwerten.

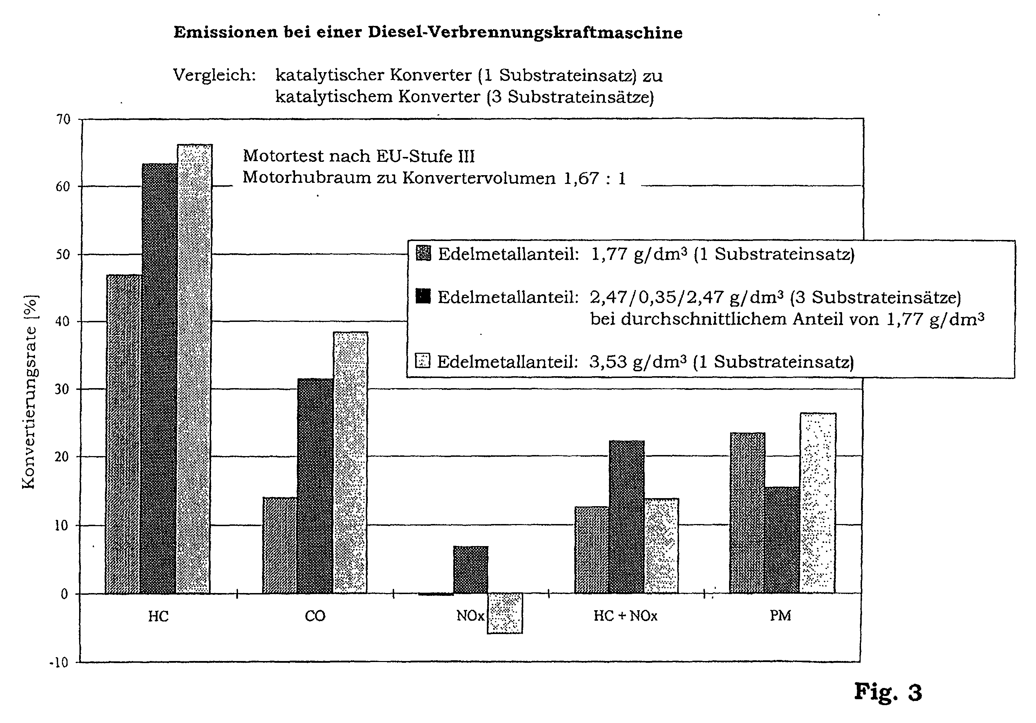

Fig. 3 zeigt ein Diagramm, bei dem die Konvertierungsraten zweier herkömmlicher katalytischer Konverter mit den Konvertierungsraten eines erfindungsgemäßen Konverters nach der ersten Ausführungsform verglichen werden. Der erste Vergleichskonverter weist einen Substrateinsatz auf, dessen katalytisch wirksame Schicht einen Edelmetallanteil von 1,77 g/dm³ (50 g/ft³) besitzt. Der zweite katalytische Vergleichskonverter hat gleichfalls nur einen Substrateinsatz, dessen Edelmetallschicht jedoch einen Edelmetallanteil von 3,53 g/dm³ (100 g/ft³) aufweist. Der erfindungsgemäße Konverter hat, wie der in dem Test nach Fig. 1 verwendete Konverter nach der ersten Ausführungsform, eine katalytisch wirksame Schicht mit einem Edelmetallanteil von 2,47 g/dm³ (70 g/ft³) beim ersten und dritten Substrateinsatz, während der zwischen diesen angeordnete zweite Substrateinsatz eine Edelmetallschicht mit einem Edelmetallanteil von 0,35 g/dm³ (10 g/ft³) besitzt. Der durchschnittliche Edelmetallanteil des erfindungsgemäßen Konverters liegt insgesamt bei 1,77 g/dm³ (50 g/ft³).

Wie dem Diagramm nach Fig. 3 zu entnehmen ist, liegen die Konvertierungsraten des erfindungsgemäßen Konverters bei allen Abgasen (HC, CO, NOx, HC + NOx) über den Konvertierungsraten des ersten Vergleichskonverters, dessen katalytisch wirksame Schicht einen Edelmetallanteil von 1,77 g/dm³ (50 g/ft³) aufweist. Im Gegensatz dazu liegen die Konvertierungsraten bei den Kohlenwasserstoffen (HC) und bei Kohlenmonoxid (CO) des erfindungsgemäßen Konverters unter den Konvertierungsraten des zweiten Vergleichskonverters, der die katalytisch wirksame Schicht mit größerem Edelmetallanteil aufweist, nämlich 3,53 g/dm³ (100 g/ft³). Allerdings ist der erfindungsgemäße Konverter besser in der Lage, Stickoxide (NOx) in unschädliche Abgase umzuwandeln als der zweite Vergleichskonverter, wie dem Diagramm bei den Angaben NOx und HC+NOx zu entnehmen ist. Dies bedeutet, daß insbesondere die Reduktionsreaktion des erfindungsgemäßen Konverters bei der Umwandlung von Stickoxiden in Stickstoff und Kohlendioxid besser katalysiert wird, als bei den beiden Vergleichskonvertern. Auch in diesem Fall ist die Konvertierungsrate (PM), mit der die Umwandlung von Rußpartikel in Kohlendioxid beschrieben wird, geringer als bei den Vergleichskonvertern. Die Schadstoffmengen liegen jedoch auch hier unter den gesetzlich maximal zulässigen Grenzwerten.

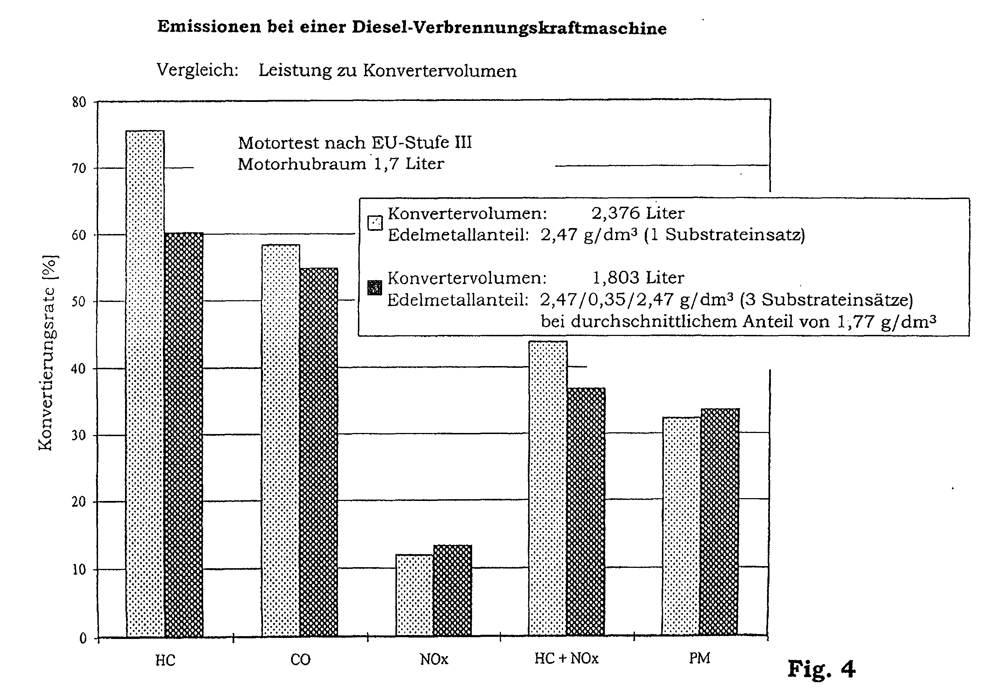

Fig. 4 zeigt einen Vergleichstest, bei dem die Leistung eines herkömmlichen Konverters mit der Leistung eines erfindungsgemäßen Konverters in Abhängigkeit vom Konvertervolumen dargestellt ist. Auch hier wurden die Emissionen einer Diesel-Verbrennungskraftmaschine im Rahmen eines Motortestes nach der EU-Stufe III durchgeführt. Der Motor hatte in diesem Fall einen Hubraum von 1,7 Litern.

Als Vergleichskonverter in herkömmlicher Bauart wurde ein Konverter mit einem Volumen von 2,376 Litern verwendet, wobei der Edelmetallanteil der katalytisch wirksamen Schicht des Substrateinsatzes bei 2,47 g/dm³ (70 g/ft³) liegt. Im Gegensatz dazu weist der erfindungsgemäße Konverter, wie der bei dem in Fig. 1 dargestellten Test verwendete Konverter, drei Substrateinsätze auf, wovon die katalytisch wirksamen Schichten des ersten und des dritten Substrateinsatzes einen Edelmetallanteil von 2,47 g/dm³ (70 g/ft³) aufweisen, während die Edelmetallbeschichtung des zwischen diesen angeordneten zweiten Substrateinsatzes einen Edelmetallanteil von 0,35 g/dm³ (10 g/ft³) besitzt. Der durchschnittliche Edelmetallanteil des erfindungsgemäßen Konverters liegt bei 1,77 g/dm³ (50 g/ft³), während sein Konvertervolumen bei 1,803 Litern liegt, also geringer ist als das Konvertervolumen des Vergleichskonverters.

Wie dem Diagramm nach Fig. 4 zu entnehmen ist, sind die Konvertierungsraten des erfindungsgemäßen Konverters bei den Kohlenwasserstoffen (HC), bei Kohlenmonoxid (CO) und bei der Reduktionsreaktion von Kohlenwasserstoffen mit Stickoxiden (HC + NOx) geringer als die Konvertierungsraten des Vergleichskonverters. Im Gegensatz dazu sind die Konvertierungsraten bei der Umwandlung der Stickoxide (NOx) und bei der Umwandlung von Rußpartikeln (PM) bei dem erfindungsgemäßen Konverter etwas höher als die des Vergleichskonverters.

Bei diesem Vergleichstest ist jedoch festzustellen, daß trotz des deutlich größeren Konvertervolumens (2,376 Liter zu 1,803 Liter) und des größeren Edelmetallanteils der Beschichtung, nämlich 2,47 g/dm³ (70 g/ft³) bei dem Vergleichskonverter zu 1,77 g/dm³ (50g/ft³) dem erfindungsgemäßen Konverter, die Konvertierungsraten des Vergleichskonverters, insbesondere bei der Umwandlung von Kohlenmonoxid und der Reaktion von Kohlenwasserstoffen mit Stickoxiden, überraschenderweise nur geringfügig höher sind, so daß trotz des geringeren Konvertervolumens des erfindungsgemäßen Konverters verglichen mit dem des Vergleichskonverters annähernd die gleiche Leistung durch den erfindungsgemäßen Konverter erbracht wird.

Abschließend ist noch zu bemerken, daß bei durchgeführten Lebensdauertests, sogenannten Rapid Aging Tests, festgestellt wurde, daß sowohl die Lebensdauer als auch die Konvertierungsrate der erfindungsgemäßen Konverter über denen der Vergleichskonverter lagen, obwohl die verwendeten erfindungsgemäßen Konverter ein geringeres Konvertervolumen und einen geringeren Edelmetallanteil bei der katalytisch wirksamen Schicht aufwiesen.

## Patentansprüche

1. Katalytischer Konverter für eine Abgasanlage einer Verbrennungskraftmaschine, insbesondere einer Diesel-Verbrennungskraftmaschine, mit einem Gehäuse, an dem ein Einlaß zum Anschluß an die Verbrennungskraftmaschine und ein Auslaß ausgebildet sind, sowie mit einem ersten und einem zweiten mit einem katalytisch wirksamen Edelmetall beschichteten Substrat, die in Strömungsrichtung des Abgases gesehen aufeinander folgend im Gehäuse angeordnet sind, wobei das erste Substrat nahe dem Einlaß und
in Strömungsrichtung des Abgases gesehen nach dem zweiten Substrat ein mit mindestens einem katalytisch wirksamen Edelmetall beschichtetes drittes Substrat nahe dem Auslaß im Gehäuse angeordnet ist, **dadurch gekennzeichnet,**
**daß** das zweite Substrat mit einer geringeren Menge katalytisch wirksamen Edelmetalls beschichtet ist als das erste und das dritte Substrat.

2. Katalytischer Konverter nach Anspruch 1,
**dadurch gekennzeichnet,**
**daß** der Gehalt an katalytisch wirksamem Edelmetall des ersten Substrates und/oder des dritten Substrates in einem Bereich von etwa 1,77 g/dm³ bis etwa 5,30 g/dm³ (50 g/ft³ bis 150 g/ft³) liegt.

3. Katalytischer Konverter nach Anspruch 1,
**dadurch gekennzeichnet,**
**daß** der Gehalt an katalytisch wirksamem Edelmetall des zweiten Substrates in einem Bereich von etwa 0,035 g/dm³ bis etwa 0,35 g/dm³ (1 g/ft³ bis 10 g/ft³) liegt.

4. Katalytischer Konverter nach Anspruch 1,
**dadurch gekennzeichnet,**
**daß** das Volumen des ersten Substrates 20 bis 50% des Volumens aller Substrate beträgt.

5. Katalytischer Konverter nach Anspruch 1,
**dadurch gekennzeichnet,**
**daß** das Volumen des zweiten Substrates 30 bis 70%, vorzugsweise 40%, des Volumens aller Substrate beträgt.

6. Katalytischer Konverter nach Anspruch 1,
**dadurch gekennzeichnet,**
**daß** das Volumen des dritten Substrates 30 bis 40% des Volumens aller Substrate beträgt.

7. Katalytischer Konverter nach Anspruch 1,
**dadurch gekennzeichnet,**
**daß** der Gehalt an katalytisch wirksamem Edelmetall des ersten und des dritten Substrates bei etwa 2,47 g/dm³ (70 g/ft³) und der Gehalt an katalytisch wirksamem Edelmetall des zweiten Substrates bei etwa 0,35 g/dm³ (10 g/ft³) liegt, wobei der durchschnittliche Gehalt an katalytisch wirksamem Edelmetall des katalytischen Konverters bei etwa 1,77 g/dm³ (50 g/ft³) liegt.

8. Katalytischer Konverter nach Anspruch 1,
**dadurch gekennzeichnet,**
**daß** der Gehalt an katalytisch wirksamem Edelmetall des ersten und des dritten Substrates bei etwa 3,53 g/dm³ (100 g/ft³) und der Gehalt an katalytisch wirksamem Edelmetall des zweiten Substrates bei etwa 0,071 g/dm³ (2 g/ft³) liegt, wobei der durchschnittliche Gehalt an katalytisch wirksamem Edelmetall des katalytischen Konverters bei etwa 1,77 g/dm³ (50 g/ft³) liegt.

9. Katalytischer Konverter nach Anspruch 1,
**dadurch gekenn*z*eichnet,**
daß jedes Substrat als keramischer oder metallischer Monolith ausgebildet ist und vorzugsweise 54 bis 62 Zellen bzw. Kanäle pro cm² (350 bis 400 cells per in²) aufweist.

10. Katalytischer Konverter nach Anspruch 1,
**dadurch gekennzeichnet,**
**daß** die einander zugewandten Stirnseiten des ersten und zweiten Substrates und/oder die einander zugewandten Stirnseiten des zweiten und dritten Substrates mit Abstand zueinander angeordnet sind.

11. Katalytischer Konverter nach Anspruch 1,
**dadurch gekennzeichnet,**
**daß** das Gehäuse des katalytischen Konverters zur aktiven Stickoxidreduktion mindestens eine Zuführung aufweist, durch die zusätzliche Kohlenwasserstoffe, vorzugsweise aus dem Verbrennungsprozeß der Verbrennungskraftmaschine in das Gehäuse einleitbar sind.

12. Katalytischer Konverter nach Anspruch 11,
**dadurch gekennzeichnet,**
**daß** zum Einleiten der zusätzlichen Kohlenwasserstoffe eine Druckleitung mit dem Gehäuse des katalytischen Konverters verbunden ist.

## Claims

1. Catalytic converter for an exhaust gas system of an internal combustion engine, in particular a diesel internal combustion engine, having a housing on which an inlet for connection to the internal combustion engine and an outlet are constructed and having a first and a second substrate coated with a catalytically active noble metal which viewed in the direction of flow of the exhaust gas are arranged consecutively in the housing, wherein the first substrate is arranged in the vicinity of the inlet and viewed in the direction of flow of the exhaust gas after the second substrate a third substrate coated with at least one catalytically active noble metal is arranged in the housing in the vicinity of the outlet, **characterised in that** the second substrate is coated with a smaller amount of catalytically active noble metal than the first and the third substrate.

2. Catalytic converter according to Claim 1, **characterised in that** the catalytically active noble metal content of the first substrate and/or of the third substrate lies in a range of from approximately 1.77 g/dm³ to approximately 5.30 g/dm³ (50 g/ft³ to 150 g/ft³).

3. Catalytic converter according to Claim 1, **characterised in that** the catalytically active noble metal content of the second substrate lies in a range of from approximately 0.035 g/dm³ to approximately 0.35 g/dm³ (1 g/ft³ to 10 g/ft³).

4. Catalytic converter according to Claim 1, **characterised in that** the volume of the first substrate is 220 to 50 % of the volume of all substrates.

5. Catalytic converter according to Claim 1, **characterised in that** the volume of the second substrate is 30 to 70 %, preferably 40 %, of the volume of all substrates.

6. Catalytic converter according to Claim 1, **characterised in that** the volume of the third substrate is 30 to 40 % of the volume of all substrates.

7. Catalytic converter according to Claim 1, **characterised in that** the catalytically active noble metal content of the first and of the third substrate is approximately 2.47 g/dm³ (70 g/ft³) and the catalytically active noble metal content of the second substrate is approximately 0.35 g/dm³ (10 g/ft³), wherein the average catalytically active noble metal content of the catalytic converter is approximately 1.77 g/dm³ (50 g/ft³).

8. Catalytic converter according to Claim 1, **characterised in that** the catalytically active noble metal content of the first and of the third substrate is approximately 3.53 g/dm³ (100 g/ft³) and the catalytically active noble metal content of the second substrate is approximately 0.071 g/dm³ (2 g/ft³), wherein the average catalytically active noble metal content of the catalytic converter is approximately 1.77 g/dm³ (50 g/ft³).

9. Catalytic converter according to Claim 1, **characterised in that** each substrate is constructed in the form of a ceramic or metallic monolith and preferably possesses 54 to 62 cells or channels per cm² (350 to 400 cells per in²).

10. Catalytic converter according to Claim 1, **characterised in that** the end faces facing one another of the first and second substrate and/or the end faces facing one another of the second and third substrate are arranged at a distance relative to one another.

11. Catalytic converter according to Claim 1, **characterised in that** for the active reduction of nitrogen oxides the housing of the catalytic converter has at least one supply device through which additional hydrocarbons can be passed into the housing, preferably from the combustion process of the internal combustion engine.

12. Catalytic converter according to Claim 11, **characterised in that** for passing in the additional hydrocarbons a pressure line is connected to the housing of the catalytic converter.

## Revendications

1. Convertisseur catalytique pour une installation d'échappement de gaz brûlés d'un moteur à combustion interne, en particulier d'un moteur diesel, comprenant un boîtier sur lequel sont formées une entrée pour le raccordement au moteur à combustion interne et une sortie, ainsi qu'un premier et un deuxième substrats revêtus d'un métal noble catalytiquement efficace, qui sont agencés dans le boîtier l'un après l'autre en se plaçant dans le sens d'écoulement des gaz d'échappement, le premier substrat étant agencé à proximité de l'entrée en se plaçant dans le sens d'écoulement du gaz d'échappement et, après le deuxième substrat, un troisième substrat revêtu d'au moins un métal noble catalytiquement efficace à proximité de la sortie dans le boîtier, **caractérisé en ce que** le deuxième substrat est revêtu d'une quantité de métal noble catalytiquement efficace inférieure à celle du premier et du troisième substrat.

2. Convertisseur catalytique selon la revendication 1, **caractérisé en ce que** la teneur en métal noble catalytiquement efficace du premier substrat et/ou du troisième substrat se situe dans une plage d'environ 1,77 g/dm³ à environ 5,30 g/dm³ (50 g/pied³ à 150 g/pied³).

3. Convertisseur catalytique selon la revendication 1, **caractérisé en ce que** la teneur en métal noble catalytiquement efficace du deuxième substrat se situe dans une plage d'environ 0,035 g/dm³ à environ 0,35 g/dm³ (1 g/pied³ à 10 g/pied³).

4. Convertisseur catalytique selon la revendication 1, **caractérisé en ce que** le volume du premier substrat est de 20 à 50% du volume de tous les substrats.

5. Convertisseur catalytique selon la revendication 1, **caractérisé en ce que** le volume du deuxième substrat est de 30 à 70%, de préférence de 40%, du volume de tous les substrats.

6. Convertisseur catalytique selon la revendication 1, **caractérisé en ce que** le volume du troisième substrat est de 30 à 40% du volume de tous les substrats.

7. Convertisseur catalytique selon la revendication 1, **caractérisé en ce que** la teneur en métal noble catalytiquement efficace des premier et troisième substrats se situe à environ 2,47 g/dm³ (70 g/pied³) et la teneur en métal noble catalytiquement efficace du deuxième substrat se situe à environ 0,35 g/dm³ (10 g/pied³), la teneur moyenne en métal noble catalytiquement efficace du convertisseur catalytique se situant à environ 1,77 g/dm³ (50 g/pied³).

8. Convertisseur catalytique selon la revendication 1, **caractérisé en ce que** la teneur en métal noble catalytiquement efficace des premier et troisième substrats se situe à environ 3,53 g/dm³ (100 g/pied³) et la teneur en métal noble catalytiquement efficace du deuxième substrat se situe à environ 0,071 g/dm³ (2 g/pied³), la teneur moyenne en métal noble catalytiquement efficace du convertisseur catalytique se situant à environ 1,77 g/dm³ (50 g/pied³).

9. Convertisseur catalytique selon la revendication 1, **caractérisé en ce que** chaque substrat se présente sous la forme d'un monolithe céramique ou métallique et présente de préférence 54 à 62 cellules ou canaux par cm² (350 à 400 cellules par pouce²).

10. Convertisseur catalytique selon la revendication 1, **caractérisé en ce que** les faces frontales, tournées l'une vers l'autre, des premier et deuxième substrats et/ou les faces frontales, tournées l'une vers l'autre, des deuxième et troisième substrats sont agencées à distance les unes des autres.

11. Convertisseur catalytique selon la revendication 1, **caractérisé en ce que** le boîtier du convertisseur catalytique présente pour une réduction active des oxydes d'azote au moins une conduite d'alimentation, par laquelle des hydrocarbures supplémentaires, de préférence formés au cours du processus de combustion du moteur à combustion interne, peuvent être introduits dans le boîtier.

12. Convertisseur catalytique selon la revendication 11, **caractérisé en ce qu'**une conduite de pression est reliée au boîtier du convertisseur catalytique pour introduire les hydrocarbures supplémentaires.
